# FASCICULE DE BREVET EUROPEEN

(11) **EP 3 678 838 B1**
(45) Date de publication et mention de la délivrance du brevet: **19.01.2022**
(21) Numéro de dépôt: 18750224.0
(22) Date de dépôt: 10.08.2018
(51) Int. Cl.: B29C 49/42, B29C 49/06, B65G 47/22, B65G 51/03, B65G 21/20

(54) **PROCEDE ET DISPOSITIF DE REGLAGE D'UN CONVOYEUR DE PREFORMES**
VERFAHREN UND VORRICHTUNG ZUM EINSTELLEN EINES VORFORMFÖRDERERS
METHOD AND DEVICE FOR ADJUSTING A PREFORM CONVEYOR

(30) Priorité: 06.09.2017 FR 1758205
(43) Date de publication de la demande: 15.07.2020
(73) Titulaire: Sidel Participations, 76930 Octeville-sur-Mer (FR)
(72) Inventeur: SALOMON, Gautier, 76930 Octeville-sur-Mer (FR)
(74) Mandataire: Sidel Group
(86) Numéro de dépôt international: PCT/EP2018/071785
(87) Numéro de publication internationale: WO 2019/048182

(56) Documents cités:
- EP-A1- 1 331 182
- WO-A1-99/36337
- FR-A1- 2 806 395
- FR-A1- 2 882 736

## Description

La présente invention entre dans le domaine du convoyage de produits de type préforme au sein d'une ligne de production, en particulier une ligne de production de récipients par soufflage.

La présente invention concerne un procédé de réglage d'un convoyeur de préformes, ainsi qu'un dispositif de réglage d'un convoyeur de préformes.

De manière connue, la fabrication de récipients en matériau plastique, tels des flacons ou bouteilles, peut s'effectuer au cours d'une opération de mise en forme par injection-soufflage à partir de paraisons communément appelées « préformes ». Ces préformes présentent une forme oblongue en tube, comprenant une extrémité supérieure ouverte. Chaque préforme s'apparente globalement à un tube à essai, surmonté du goulot du futur récipient qu'elle constituera après soufflage.

Plus précisément, chaque préforme est constituée d'un corps surmonté d'une collerette annulaire saillante radialement par rapport audit corps, ménageant une portion sous collerette. Ladite collerette est pourvue supérieurement d'un col terminé par un buvant.

Au sein d'une ligne de production par soufflage, les préformes sont transportées par des convoyeurs depuis un module situé en amont, où lesdites préformes peuvent être fabriquées, déversées ou stockées, afin d'alimenter un autre module situé en aval, par exemple un module de soufflage. Outre l'alimentation en continu à une cadence élevée, lesdits convoyeurs peuvent aussi assurer le bon positionnement des préformes pour leur traitement en sortie par ledit module aval. Pour ce faire, les convoyeurs s'étendent longitudinalement entre les modules amont et aval, depuis une entrée jusqu'à une sortie, et comportent plusieurs moyens permettant le maintien et le guidage des préformes tout le long du convoyage. De tels moyens de guidage sont configurés de manière à orienter les préformes verticalement ou sensiblement verticalement, leur buvant vers le haut, retenues inférieurement sous leur collerette, leur fond se positionnant naturellement vers le bas sous l'effet de la gravité.

Les préambules des revendications 1 et 5 décrivent un états de la technique interne.

"Par exemple, le document WO99/36337 décrit un appareil pour transférer des préformes, équipé d'une paire de rails parallèles adaptés pour retenir les préformes par leur col. Plus précisément, chaque préforme est supportée sous sa collerette par au moins une paire de guides, définissant un espace latéral de support de ladite portion sous collerette ; chaque préforme est guidée en partie inférieure de son corps par au moins une paire de rails, définissant un intervalle de maintien transversal inférieur ; son buvant est guidé par au moins un guide supérieur, définissant une hauteur maximale entre lesdits guides et le buvant. Ce guidage selon trois directions assure le maintien de chaque préforme dans cette position verticale.

Dès lors, de tels espacements étant dépendants des dimensions propres aux préformes, il est nécessaire de pouvoir les adapter à chaque production en fonction du format des préformes à acheminer. Pour ce faire, les moyens de guidage, à savoir chaque paire de guides, chaque paire de rails et chaque guide supérieur, comprennent des moyens d'ajustement de leurs écartements respectifs. Plus précisément, lesdits moyens d'ajustement se composent d'organes indépendants permettant de modifier les positions des différents équipements constituant les moyens de guidage, pour permettre, d'une part, de rapprocher ou d'écarter les guides et/ou les rails, et d'autre part, d'augmenter ou diminuer la hauteur dudit guide supérieur.

En outre, on notera que l'ajustement doit être réalisé de façon extrêmement précise, centré par rapport au chemin de convoyage, en raison des moyens prévus en sortie pour réceptionner les préformes, comme par exemple une roue crantée dont les logements formés par la denture reçoivent intérieurement chaque préforme.

De plus, en fonction de la longueur du convoyeur, lesdits moyens d'ajustement, propres respectivement à la paire de rails, au couple de guides et au guide supérieur, peuvent être répartis à différents emplacements de ladite longueur. En effet, essentiellement en raison de la masse des moyens de guidage engendrant une déformation, notamment un ploiement, sur la longueur du convoyeur, atteignant plusieurs mètres, il est nécessaire de répartir, en différents points sur ladite longueur totale, plusieurs organes d'ajustement pour régler avec précision lesdits espacements de chaque équipement. Ainsi, à titre d'exemple, pour des moyens de convoyage d'une longueur d'approximativement quatre mètres, des organes d'ajustement peuvent être positionnés à chaque mètre.

Actuellement, lesdits moyens d'ajustement sont prévus manuels, un opérateur actionnant chaque organe d'ajustement à chaque emplacement de la longueur du convoyeur, afin de reproduire avec exactitude les espacements requis pour le bon maintien et la circulation optimale des préformes d'un format donné. Cette opération effectuée manuellement reste donc très précaire et fastidieuse. En outre, un inconvénient réside dans le risque d'erreur lors de la modification d'une valeur d'ajustement d'un organe à un autre pour un même équipement, à savoir les guides, les rails ou le guide supérieur : le maintien et la circulation des préformes ne sont alors plus opérés convenablement, au niveau de l'organe d'ajustement mal réglé, pouvant entraîner des bourrages ou des mauvais positionnements des préformes, voire l'arrêt de la ligne de production.

Par ailleurs, les ajustements actuels s'effectuent selon une première phase de production initiale, dite de « préréglage », pouvant durer plusieurs heures, afin d'obtenir un maintien et une circulation optimisés des préformes sur toute la longueur du convoyeur. Ces réglages doivent être affinés pendant cette phase préliminaire en vue d'obtenir ce résultat. En effet, les préformes de dimensions théoriques connues, peuvent présenter des fluctuations minimes, notamment en raison du matériau plastique les constituant. De telles fluctuations, même si de l'ordre du dixième de millimètre, doivent être prises en considération essentiellement en raison de la cadence de production extrêmement élevée, avec un défilement de plusieurs milliers de préformes à l'heure. Il convient donc d'affiner chaque réglage de chaque organe d'ajustement, opération longue et fastidieuse quand elle est réalisée manuellement.

Ensuite, en cours de production, il est souvent nécessaire d'intervenir pour modifier le réglage d'un des organes d'ajustement, opération effectuer une fois de plus manuellement. Pour des raisons de sécurité, la vitesse de production de la ligne est alors diminuée, voire arrêtée, en vue d'effectuer cette modification du réglage, entraînant une baisse du rendement.

D'autre part, lors d'un changement de production, à savoir que les préformes à convoyer présentent des formats différents, il est nécessaire de modifier tous les réglages, encore une fois manuellement, entraînant une perte de temps considérable, surtout lors du retour vers une production déjà réalisée auparavant, dont les préréglages initiaux ont été généralement mal conservés pour chaque organe d'ajustement des moyens de réglage de chaque équipement.

Dans ce contexte, une première démarche inventive a consisté à enregistrer pour chaque format de préformes, les données relatives aux différents réglages des moyens de guidage. Cet enregistrement s'effectue lors de la phase de préréglage. Il peut aussi être affiné par modifications des données enregistrées si une intervention d'ajustement a lieu en cours de production. Ainsi sauvegardées, les données d'un premier format de préformes peuvent être restituées pour ajuster facilement et rapidement les moyens de guidage au moment de la production dudit premier format de préformes.

A cet effet, un autre aspect de l'invention a consisté à automatiser les interventions de réglage des moyens de guidage, aux niveaux des différents organes d'ajustement, en vue de s'affranchir d'une intervention manuelle par un opérateur à chaque emplacement du convoyeur. Cette automatisation est prévue par l'intermédiaire d'une motorisation propre à chaque organe d'ajustement.

De plus, l'automatisation se veut indépendante pour chaque groupe d'organes d'ajustement prévus le long du convoyeur pour régler de façon dissociée un type d'équipements, à savoir soit les guides, soit les rails, soit le guide supérieur. Toutefois, un même type d'équipements doit être réglé de concert et, pour ce faire, l'invention prévoit un asservissement de la motorisation de chaque groupe d'organes d'ajustement, pour modifier conjointement leurs positions. Ainsi, en une seule commande, on contrôle automatiquement et simultanément le réglage aux niveaux des groupes des différents organes d'ajustement.

Enfin, en déportant le contrôle, l'invention permet à un opérateur d'intervenir directement sur le réglage de chaque organe d'ajustement, un à la fois ou par groupe.

Pour ce faire, l'invention a pour objet un procédé de convoyage de préformes, chaque préforme ayant un format et étant constituée au moins d'un corps surmonté d'une collerette annulaire saillante radialement par rapport audit corps, ménageant une portion sous collerette, et pourvue supérieurement d'un col terminé par un buvant. Ledit procédé comprend une phase de préréglage durant laquelle des préformes d'un premier format sont convoyées le long d'une surface longitudinale de convoyage et dans laquelle :
- on supporte chaque préforme sous sa collerette par au moins une paire de guides, définissant un espace latéral de support de ladite portion sous collerette ;
- on guide en partie inférieure le corps de chaque préforme par au moins une paire de rails, définissant un intervalle de maintien transversal inférieur ;
- on guide le buvant de chaque préforme par au moins un guide supérieur, définissant une hauteur maximale entre lesdits guides et le buvant ;
ladite paire de guides, ladite paire de rails, ledit guide supérieur s'étendant le long de la longueur de convoyage ; ledit espace latéral de support, ledit intervalle de maintien inférieur et ladite hauteur maximale étant indépendamment ajustés par rapport audit premier format en différents points d'ajustement répartis le long de la longueur de convoyage ;
- on enregistre les valeurs de l'espace latérale supérieur, de l'intervalle de maintien et de la hauteur maximale pour ledit premier format de préformes.

Ledit procédé se caractérise en ce qu'il comprend une phase de démarrage dans laquelle on ajuste automatiquement l'espace latéral supérieur et/ou l'intervalle de maintien et/ou la hauteur maximale selon lesdites valeurs enregistrées, ce par quoi le convoyeur peut être utilisé pour convoyer un autre format de préformes entre la phase de préréglage et la phase de démarrage.

Autrement dit, pour convoyer des préformes d'un deuxième format, on procède à ladite phase de préréglage durant laquelle des préformes dudit deuxième format sont convoyées le long de ladite surface longitudinale de convoyage ; pour convoyer des préformes dudit premier format, on ajuste automatiquement l'espace latéral supérieur, l'intervalle de maintien et/ou la hauteur maximale selon lesdites valeurs enregistrées.

Selon d'autres caractéristiques additionnelles, on peut ajuster aux niveaux desdits différents points d'ajustement répartis le long de la longueur de convoyage ou le long de la surface longitudinale de convoyage, de façon asservie respectivement l'espace latéral supérieur, l'intervalle de maintien et/ou la hauteur maximale.

On peut ajuster l'espace latéral supérieur, l'intervalle de maintien et/ou la hauteur maximale par commande déportée desdits points d'ajustement.

On peut modifier la valeur de l'espace latéral supérieur, de l'intervalle de maintien et/ou de la hauteur maximale en au moins un point d'ajustement.

L'invention concerne aussi un dispositif de réglage d'un convoyeur de préformes, chaque préforme ayant un format et étant constituée au moins d'un corps surmonté d'une collerette annulaire saillante radialement par rapport audit corps, ménageant une portion sous collerette, et pourvue supérieurement d'un col terminé par un buvant, ledit convoyeur comprenant une surface longitudinale de convoyage desdites préformes pourvue de moyens de guidage desdites préformes, lesdits moyens de guidage étant constitués par :
- au moins une paire de guides, dont les positions définissent un espace latéral de support de ladite portion sous collerette ;
- au moins une paire de rails, dont les positions définissent un intervalle de maintien transversal inférieur ;
- au moins un guide supérieur, dont la position définit une hauteur maximale entre lesdits guides et le buvant ; ledit dispositif comprenant des moyens de réglage desdits moyens de guidage, lesdits moyens réglage comprenant des organes indépendants d'ajustement des positions de chaque paire de guides, de chaque paire de rails et de chaque guide supérieur, lesdits organes d'ajustement étant répartis en des points d'ajustement le long de ladite surface longitudinale de convoyage.

Un tel dispositif de réglage se caractérise par le fait qu'il comprend :
- des moyens d'enregistrement des données des positions de chaque paire de guides, de chaque paire de rails et de chaque guide supérieur, pour chaque format de préformes ;
- chaque organe d'ajustement comprenant des moyens de motorisation du déplacement de chaque paire de guides, de chaque paire de rails et de chaque guide supérieur ;
- lesdits moyens de motorisation propres à la paire de guides, à la paire de rails et au guide supérieur étant respectivement asservis par groupes distincts ;
- lesdits moyens de réglage comprenant des moyens de commande automatique de chaque groupe desdits moyens de motorisation, en fonction desdites données enregistrées pour chaque format de préforme.

Selon d'autres caractéristiques additionnelles d'un tel dispositif de réglage, lesdits moyens de commande peuvent comprendre des moyens informatiques déportés au moins intégrant lesdits moyens d'enregistrement.

D'autres caractéristiques et avantages de l'invention ressortiront de la description détaillée qui va suivre des modes de réalisation non limitatifs de l'invention, en référence aux figures annexées dans lesquelles :
- la figure 1 représente schématiquement une préforme selon une vue de côté ;
- la figure 2 représente schématiquement une vue simplifiée en perspective de trois-quarts plongeant, d'un convoyeur équipé du dispositif de réglage selon l'invention, montrant partiellement l'asservissement par groupe des organes d'ajustement ; et
- les figures 3 et 4 représentent schématiquement des vues simplifiées selon une coupe verticale de la figure 2, montrant les moyens de guidage dudit convoyeur ajustés dans deux positions différentes en vue de convoyer deux formats différents de préformes, dont un seul format est représenté sur la figure 3.

La présente invention concerne le convoyage de préformes 1.

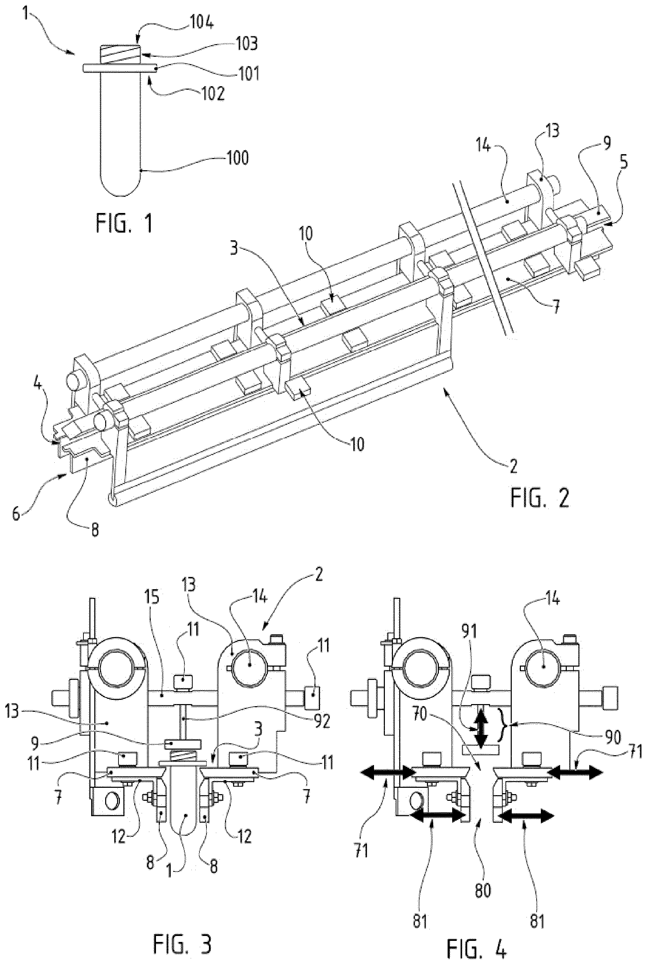

En référence à la figure 1, chaque préforme 1 est constituée au moins d'un corps 100 surmonté d'une collerette 101 annulaire saillante radialement par rapport audit corps 100, ménageant une portion 102 sous collerette, et pourvue supérieurement d'un col 103 terminé par un buvant 104.

Chaque préforme 1 a un format. Ce format est déterminé par les différentes dimensions de chaque préforme 1, notamment la longueur de son corps 100 ainsi que son diamètre, le rayon de sa collerette 101 et la hauteur de son col 103 avec son buvant 104.

L'acheminement des préformes 1 s'effectue par l'intermédiaire d'un convoyeur 2. Un tel convoyeur 2 comprend une surface longitudinale de convoyage 3 desdites préformes 1. Elle assure le déplacement desdites préformes 1 le long du convoyeur 2 depuis une entrée 4 située en amont jusqu'à une sortie 5 située en aval, par rapport au sens de déplacement des préformes 1.

Ladite surface longitudinale de convoyage 3 est pourvue de moyens de guidage 6 desdites préformes 1. Ces moyens de guidage assurent le bon positionnement de chaque préforme 1 au cours de son déplacement, en particulier en la maintenant transversalement et en servant de support sur lequel elle repose.

Pour ce faire, lesdits moyens de guidage 6 sont constitués par au moins une paire de guides 7, dont les positions définissent un espace latéral 70 de support de ladite portion 102 sous collerette 101 ; au moins une paire de rails 8, dont les positions définissent un intervalle 80 de maintien transversal inférieur ; au moins un guide supérieur 9, dont la position définit une hauteur maximale 90 entre lesdits guides 7 et le buvant 104.

Ladite paire de guides 7, ladite paire de rails 8 et ledit guide supérieur 9 s'étendent le long de la longueur de convoyage. Plusieurs paires de guides 7, plusieurs paires de rails 8 et plusieurs guides supérieurs 9 peuvent être réciproquement aboutés, de manière à allonger de façon continue sans interruption la surface longitudinale de convoyage 3.

Plus avant, selon le mode de réalisation visible sur les figures 3 et 4, les guides 7 d'une paire s'étendent horizontalement dans un même plan, présentant des chants latéraux internes parallèles. De tels chants peuvent être biseautés, étant divergents depuis l'intérieur vers l'extérieur et depuis la surface supérieure vers la surface inférieure de chaque guide 7 (i.e. s'écartant depuis l'intérieur et vers le bas). L'écartement entre les bords rapprochés desdits guides 7 constitue ledit espace latéral 70. Dès lors, ladite collerette 101 vient reposer sur la face supérieure de chaque guide 7, de part et d'autre dudit espace latéral 70, comme montré sur la figure 3. L'espace latéral 70 doit donc être inférieur au rayon saillant de ladite collerette 101, afin de la supporter par le dessous au niveau d'au moins une partie de sa portion 102. Un jeu peut être ménagé de sorte que lesdits chants des guides 7 ne viennent pas au contact de la paroi extérieure dudit corps 100, afin de ne pas l'enserrer et le bloquer lors du déplacement de chaque préforme 1.

De plus, les rails 8 d'une paire sont parallèles et s'étendent verticalement. Les faces intérieures d'une paire de rails 8, situées en opposition, déterminent un écartement correspondant audit intervalle 80, servant à maintenir chaque préforme 1 dans une position verticale ou sensiblement verticale lors de son déplacement. L'intervalle 80 est équivalent au diamètre extérieur du corps 100 de chaque préforme 1, légèrement supérieur au jeu près, afin de ne pas l'enserrer et la bloquer lors du déplacement.

Dès lors, on constate que chaque préforme 1 est juste supportée par appui de sa collerette 101 sur les guides 7, venant se positionner naturellement selon une orientation verticale sous le seul effet de la gravité. La verticalité de cette orientation est assurée de part et d'autre par lesdits rails 8, limitant le positionnement incliné des préformes 1.

Cette orientation verticalement droite et le maintien desdites préformes 1 sont améliorés par l'intermédiaire dudit guide supérieur 9. Pour ce faire, le guide supérieure 9 s'étend horizontalement, dans un plan préférentiellement parallèle et situé supérieurement par rapport au plan desdits guides 7. La face inférieure du guide supérieur 9 forme une glissière limitant le déplacement vertical des préformes 1, en déterminant la hauteur maximale 90 entre ladite face inférieure dudit guide supérieur 9 et les faces supérieures desdits guides 7. Au jeu près, ladite hauteur maximale 90 doit correspondre à l'épaisseur de la collerette 101 ajoutée à la hauteur du col 103 et du buvant 104, à savoir depuis la portion 102 sous collerette 101 jusqu'au bord supérieur dudit buvant 104.

Ainsi, on comprend la nécessité de régler les positions relatives de la paire de guides 7, de la paire de rails 8 et du rail supérieur 9, en fonction du format propres aux préformes 1 à convoyer, à savoir de leurs dimensions. En outre, un tel réglage doit être extrêmement précis, assurant, d'une part, le bon maintien des préformes 1 pour assurer leur cheminement dans une position optimale et, d'autre part, de ne pas les enserrer ce qui provoquerait des frottements susceptibles de les bloquer.

Pour ce faire, chaque paire de guides 7, chaque paire de rails 8 et chaque guide supérieur 9 sont prévus mobiles. En particulier, lesdits guides 7 sont montés en déplacement selon une première translation horizontale 71, tandis que lesdits rails 8 sont montés en déplacement selon une seconde translation horizontale 81. Le guide supérieur 9 est monté en déplacement selon une translation verticale 91. On notera que les déplacements des guides 7 selon la première translation 71 sont asservis entre eux et s'effectuent symétriquement de part et d'autre par rapport au plan médian longitudinal vertical du convoyeur 2. Les déplacements des rails 8 selon la seconde translation 81 sont aussi asservis entre eux, symétriquement de chaque côté du même plan médian. Les déplacements selon les première 71 et seconde 81 translations horizontales et selon la translation verticale 91 sont représentés par des flèches sur la figure 4.

Selon le mode de réalisation représenté sur les figures 3 et 4, pour assurer la mobilité des éléments constituant les moyens de guidage 6, les guides 7 et les rails 8 sont montés sur deux équerres 12, sous forme de profilés conformés en L, supportées par des couples de blocs 13, espacés le long dudit convoyeur 2. Lesdits blocs 13 sont notamment alignés par l'intermédiaire d'arbres longitudinaux 14 s'étendant sur toute la longueur du convoyeur 2. Lesdits blocs 13 sont prévus mobile en translation horizontale, permettant de les rapprocher ou de les écarter l'un de l'autre, transversalement par rapport à la longueur dudit convoyeur 2.

Plus avant, lesdits rails 8 sont fixes et solidaires sur la face verticale de chaque équerre 12, tandis que lesdits guides 7 sont montés en translation par rapport à la face horizontale de chaque équerre 12. Ainsi, les déplacements des rails 8 sont induits par les déplacements des blocs 13, tandis que les déplacements des guides 7 sont indépendants.

Par ailleurs, ledit guide supérieur 9 est fixé à l'extrémité inférieure d'au moins une tige 92, centrée par rapport audit plan médian dudit convoyeur 2, chaque tige 92 étant mobile verticalement par rapport à un axe transversal 15. Plusieurs tiges 92 coulissant verticalement sur des axes transversaux 15 correspondants, positionnés à différents emplacement le long du convoyeur 2, supportent donc inférieurement ledit rail supérieur 9. En outre, les blocs 13 coulissent latéralement par rapport à chaque axe transversal 15.

Pour effectuer les déplacements et le réglage des positions des éléments susmentionnés, ledit convoyeur 2 comprend des moyens de réglage 10 desdits moyens de guidage 6. Lesdits moyens de réglage comprennent des organes d'ajustement 11 indépendants des positions de chaque paire de guides 7, de chaque paire de rails 8 et de chaque guide supérieur 9. De plus, lesdits organes d'ajustement 11 sont répartis en des points d'ajustement le long de ladite surface longitudinale de convoyage 3, comme visible sur l'exemple de la figure 2.

Dès lors, il est possible de régler, d'une part, la valeur de l'espace latéral 70 entre les guides 7, d'autre part, la valeur de l'intervalle 80 des rails 8 et, d'autre part, la valeur de la hauteur 90, et ce aux niveaux de chaque point d'ajustement répartis le long du convoyeur 2 où sont positionnés lesdits organes d'ajustement 11. En somme, on peut ajuster de façon dissociée la première translation 71, la seconde translation 81 et la translation verticale 91 en chaque point d'ajustement.

A ce titre, selon l'invention, le convoyage de préformes 1 comprend une phase de préréglage durant laquelle des préformes 1 d'un premier format sont convoyées le long de la surface longitudinale de convoyage 3. Comme évoqué précédemment, on supporte chaque préforme 1 sous sa collerette 101 par au moins une paire des guides 7, définissant ledit espace latéral 70 de support de ladite portion 102 sous collerette 101. On guide en partie inférieure le corps 100 de chaque préforme 1 par au moins une paire des rails 8, définissant ledit intervalle 80 de maintien transversal inférieur. On guide le buvant 104 de chaque préforme 1 par au moins le guide supérieur 9, définissant ladite hauteur maximale 90 entre lesdits guides 7 et ledit buvant 104.

Afin de s'adapter aux dimensions propres au premier format des préformes 1 à acheminer, ledit espace latéral 70, ledit intervalle de maintien inférieur 80 et ladite hauteur maximale 90 sont indépendamment ajustés par rapport audit premier format, en différents points d'ajustement répartis le long de la longueur longitudinale de convoyage 3.

Au terme de ce préréglage, l'invention prévoit d'enregistrer les valeurs de l'espace latéral supérieur 70, de l'intervalle de maintien 80 et de la hauteur maximale 90 pour ledit premier format de préformes 1.

Avantageusement, pour convoyer des préformes d'un deuxième format, on procède à ladite phase de préréglage durant laquelle des préformes 1 dudit deuxième format sont convoyées le long de ladite surface longitudinale de convoyage 3. On reproduit alors les étapes d'ajustement des écartements respectifs des différents éléments des moyens de guidage 6, en chaque point d'ajustement, jusqu'à enregistrer les valeurs pour ledit deuxième format. Cette opération de préréglage et la sauvegarde des données qui en sont issues, est répétée pour chaque format inconnu de préformes 1. En somme, si un format et les données relatives au réglage des moyens de guidage 6 ne sont pas répertoriés, alors on procède au préréglage.

On notera que d'autres informations peuvent être associées, comme l'identification unique de chaque format de préformes 1, à savoir ledit premier format et ledit deuxième format mais aussi tout autre format.

A cet effet, l'invention prévoit des moyens d'enregistrements adaptés, par exemple sous forme informatique, telle une base de données.

Une fois un format enregistré, si on souhaite convoyer des préformes d'un format enregistré auparavant, il suffit de récupérer les valeurs des réglages déjà effectués pour ce format. Ainsi, pour convoyer des préformes 1 dudit premier format, on ajuste l'espace latéral supérieur 70, l'intervalle de maintien 80 et/ou la hauteur maximale 90 selon lesdites valeurs enregistrées pour ce premier format.

Préférentiellement, on peut ajuster aux niveaux desdits différents points d'ajustement répartis le long de la longueur de convoyage 3, de façon asservie respectivement l'espace latéral 70, l'intervalle de maintien 80 et/ou la hauteur maximale 90. En d'autres termes, la modification dudit espace latéral 70 peut s'effectuer simultanément en appliquant la même valeur ou les différentes valeurs enregistrées par le biais de tous les organes d'ajustement 11 positionnés en chaque point d'ajustement. Il en va de même pour la modification de l'intervalle 80. Il en va de même pour la modification de la hauteur 90.

A titre d'exemple, concernant l'ajustement de l'espace latéral 70, pour un premier format de préformes 1, on a enregistré une première valeur en entrée 4, légèrement supérieure à deux valeurs intermédiaires en deux points d'ajustement situés le long de la surface longitudinale de convoyage 3, tandis qu'une dernière valeur en sortie 5 est égale à ladite première valeur. Dès lors, au moment de convoyer les préformes dudit premier format, l'invention permet de connaître ladite première valeur, ladite dernière valeur et lesdites deux valeurs intermédiaires respectivement des points d'ajustement concernés et d'appliquer ces valeurs pour l'ajustement de l'espace latéral 70. Il peut en être de même pour l'ajustement de l'intervalle 80. Il peut en être de même pour l'ajustement de la hauteur 90.

Avantageusement, l'invention envisage d'effectuer chaque ajustement automatiquement.

Pour ce faire, l'invention prévoit de motoriser les moyens de guidage 6 en vue d'actionner les déplacements des éléments les constituant. Ainsi, chaque organe d'ajustement 11 comprend des moyens de motorisation du déplacement de chaque paire de guides 7, de chaque paire de rails 8 et de chaque guide supérieur 9.

De plus, lesdits moyens de motorisation propres à la paire de guides 7, à la paire de rails 8 et au guide supérieur 9 sont prévus respectivement asservis par groupes distincts. En d'autres termes, on contrôle séparément, d'une part, les déplacements d'un groupe comprenant lesdits guides 7, d'autre part, les déplacements d'un groupe avec lesdits rails 8 et, d'autre part, les déplacements d'un groupe avec chaque guide supérieur 9.

En vue d'ajuster automatiquement chacun desdits groupes, l'invention prévoit d'intégrer des moyens de commande.

De tels moyens de commande peuvent comprendre des moyens informatiques déportés, pouvant au moins intégrer lesdits moyens d'enregistrement. De tels moyens de commande peuvent être informatisés et comprendre une interface homme-machine, notamment sous forme d'un terminal informatique, fixe ou mobile.

Dès lors, il est possible d'ajuster l'espace latéral 70, l'intervalle 80 et/ou la hauteur 90 par commande à distance des organes d'ajustement 11 situés aux niveaux desdits points d'ajustement.

Lesdits moyens de commande sont connectés auxdits moyens de motorisation, de manière à commander automatiquement les déplacements de chaque groupe, en fonction desdites données enregistrées pour chaque format de préforme 1.

On notera, qu'à partir des moyens de commande, il est possible d'ajuster le réglage d'un seul point d'ajustement pour l'espace 70, l'intervalle 80 et/ou la hauteur 90, par motorisation de l'organe d'ajustement 11 correspondant, en vue d'affiner l'écartement en un endroit du convoyeur 2.

L'invention concerne aussi un dispositif de réglage d'un convoyeur 2 de préformes 1.

Comme évoqué précédemment, ledit dispositif comprend des moyens de réglage desdits moyens de guidage 6, lesdits moyens de réglage comprenant des organes indépendants d'ajustement 11 des positions de chaque paire de guides 7, de chaque paire de rails 8 et de chaque guide supérieur 9. Lesdits organes d'ajustement 11 sont répartis en des points d'ajustement le long de ladite surface longitudinale de convoyage 3.

Avantageusement, un tel dispositif de réglage comprend des moyens d'enregistrement des données des positions de chaque paire de guides 7, de chaque paire de rails 8 et de chaque guide supérieur 9, pour chaque format de préformes 1.

De plus, chaque organe d'ajustement 11 comprend des moyens de motorisation du déplacement de chaque paire de guides 7, de chaque paire de rails 8 et de chaque guide supérieur 9, avec un asservissement par groupes distincts.

Lesdits moyens de réglage du dispositif comprennent des moyens de commande automatique de chaque groupe desdits moyens de motorisation, en fonction desdites données enregistrées pour chaque format de préforme 1.

Ainsi, au travers du procédé et du dispositif de réglage d'un convoyeur 2 de préformes 1, si le format de préforme 1 que l'on veut convoyer est déjà enregistré, on commande l'actionnement automatique des moyens de motorisation des organes d'ajustement 11, entraînant la paire de guides 7 sous collerette 101, et/ou la paire de rails 8 au niveau du corps 100 et/ou le guide supérieur 9, de manière à ce que l'espace latéral 70, l'espace latéral 80 et/ou la hauteur 90 se positionne à la valeur préenregistrée.

L'invention permet donc d'assurer automatiquement un réglage précis pour chaque format de préformes 1 qui doivent être convoyées, au travers d'une sauvegarde et d'une restitution exactes des données précédemment utilisées en production pour ce type de format, offrant un gain manifeste de temps et d'efficacité, limitant les risques d'erreurs et de mauvais réglage.

## Revendications

1. Procédé de réglage d'un convoyeur (2) de préformes (1), chaque préforme (1) ayant un format et étant constituée au moins d'un corps (100) surmonté d'une collerette (101) annulaire saillante radialement par rapport audit corps (100), ménageant une portion (102) sous collerette (101), et pourvue supérieurement d'un col (103) terminé par un buvant (104), ledit procédé comprenant une phase de préréglage durant laquelle des préformes (1) d'un premier format sont convoyées le long d'une surface longitudinale de convoyage (3) et dans laquelle :
- on supporte chaque préforme (1) sous sa collerette (101) par au moins une paire de guides (7), définissant un espace latéral (70) de support de ladite portion (102) sous collerette (101) ;
- on guide en partie inférieure le corps (100) de chaque préforme (1) par au moins une paire de rails (8), définissant un intervalle de maintien (80) transversal inférieur ;
- on guide le buvant (104) de chaque préforme (1) par au moins un guide supérieur (9), définissant une hauteur maximale (90) entre lesdits guides (7) et le buvant (104) ;
ladite paire de guides (7), ladite paire de rails (8), ledit guide supérieur (9) s'étendant le long de la surface longitudinalede convoyage (3) ;
ledit espace latéral (70) de support, ledit intervalle de maintien inférieur (80) et ladite hauteur maximale (90) étant indépendamment ajustés par rapport audit premier format en différents points d'ajustement répartis le long de la surface logitudinale de convoyage (3) ;
- on enregistre les valeurs de l'espace latérale supérieur (70), de l'intervalle de maintien (80) et de la hauteur maximale (90) pour ledit premier format de préformes (1) ;
ledit procédé **se caractérisant en ce qu'**il comprend une phase de démarrage dans laquelle on ajuste automatiquement l'espace latéral supérieur (70) et/ou l'intervalle de maintien (80) et/ou la hauteur maximale (90) selon lesdites valeurs enregistrées, ce par quoi le convoyeur peut être utilisé pour convoyer un autre format de préformes entre la phase de préréglage et la phase de démarrage.

2. Procédé de réglage selon la revendication 1, **caractérisé en ce qu'**on ajuste aux niveaux desdits différents points d'ajustement répartis le long de la surface longitudinale de convoyage (2), de façon asservie respectivement l'espace latéral supérieur (70), l'intervalle de maintien (80) et/ou la hauteur maximale (90) .

3. Procédé de réglage selon l'une quelconque des revendications précédentes, **caractérisé en ce qu'**on ajuste l'espace latéral supérieur (70), l'intervalle de maintien (80) et/ou la hauteur maximale (90) par commande déportée desdits points d'ajustement.

4. Procédé de réglage selon l'une quelconque des revendications précédentes, **caractérisé en ce qu'**on modifie la valeur de l'espace latéral supérieur (70), de l'intervalle de maintien (80) et/ou de la hauteur maximale (90) en au moins un point d'ajustement.

5. Dispositif de réglage d'un convoyeur (2) de préformes (1),
chaque préforme (1) ayant un format et étant constituée au moins d'un corps (100) surmonté d'une collerette (101) annulaire saillante radialement par rapport audit corps (100), ménageant une portion (102) sous collerette (101), et pourvue supérieurement d'un col (103) terminé par un buvant (104),
ledit convoyeur (2) comprenant une surface longitudinale de convoyage (3) desdites préformes (1) pourvue de moyens de guidage (6) desdites préformes (1), lesdits moyens de guidage (6) étant constitués par :
- au moins une paire de guides (7), dont les positions définissent un espace latéral (70) de support de ladite portion (102) sous collerette (101) ;
- au moins une paire de rails (8), dont les positions définissent un intervalle de maintien (80) transversal inférieur ;
- au moins un guide supérieur (9), dont la position définit une hauteur maximale (90) entre lesdits guides (7) et le buvant (104) ;
ledit dispositif de réglage comprenant des moyens de réglage (10) desdits moyens de guidage (6), lesdits moyens réglage (10) comprenant des organes d'ajustement (11) indépendants des positions de chaque paire de guides (7), de chaque paire de rails (8) et de chaque guide supérieur (9), lesdits organes d'ajustement (11) étant répartis en des points d'ajustement le long de ladite surface longitudinale de convoyage (3),
**caractérisé par le fait que**
ledit dispositif de réglage comprend :
- des moyens d'enregistrement des données des positions de chaque paire de guides (7), de chaque paire de rails (8) et de chaque guide supérieur (9), pour chaque format de préformes (1) ;
- chaque organe d'ajustement (11) comprenant des moyens de motorisation du déplacement de chaque paire de guides (7), de chaque paire de rails (8) et de chaque guide supérieur (9) ;
- lesdits moyens de motorisation propres à la paire de guides (7), à la paire de rails (8) et au guide supérieur (9) étant respectivement asservis par groupes distincts ;
- lesdits moyens de réglage (10) comprenant des moyens de commande automatique de chaque groupe desdits moyens de motorisation, en fonction desdites données enregistrées pour chaque format de préforme (1).

6. Dispositif de réglage selon la revendication précédente, **caractérisé en ce que** lesdits moyens de commande comprennent des moyens informatiques déportés au moins intégrant lesdits moyens d'enregistrement.

## Patentansprüche

1. Verfahren zum Einstellen eines Förderers (2) von Vorformen (1), wobei jede Vorform (1) ein Format aufweist und aus zumindest einem Körper (100) gebildet ist, der von einem in Bezug auf den Körper (100) radial vorstehenden ringförmigen Kragen (101) überragt wird, einen Abschnitt (102) unter dem Kragen (101) aufweist und oben mit einem Hals (103) versehen ist, der in einem Ausguss (104) endet, wobei das Verfahren eine Voreinstellungsphase umfasst, bei der Vorformen (1) eines ersten Formats entlang einer längsverlaufenden Förderfläche (3) befördert werden und in der:
- jede Vorform (1) unter ihrem Kragen (101) durch zumindest ein Paar von Führungen (7) gestützt wird, die einen seitlichen Raum (70) zum Stützen des Abschnitts (102) unter dem Kragen (101) definieren;
- der Körper (100) jeder Vorform (1) im unteren Teil durch zumindest ein Paar von Schienen (8) geführt wird, die einen querverlaufenden unteren Halteabstand (80) definieren;
- der Ausguss (104) jeder Vorform (1) durch zumindest eine obere Führung (9) geführt wird, die eine maximale Höhe (90) zwischen den Führungen (7) und dem Ausguss (104) definiert;
wobei sich das Paar von Führungen (7), das Paar von Schienen (8) und die obere Führung (9) entlang der längsverlaufenden Förderfläche (3) erstrecken;
wobei der seitliche Stützraum (70), der untere Halteabstand (80) und die maximale Höhe (90) in Bezug auf das erste Format an unterschiedlichen Einstellpunkten, die entlang der längsverlaufenden Förderfläche (3) verlaufen, unabhängig voneinander eingestellt werden;
- die Werte des oberen seitlichen Raums (70), des Halteabstands (80) und der maximalen Höhe (90) für das erste Format von Vorformen (1) aufgezeichnet werden; wobei das Verfahren **dadurch gekennzeichnet ist, dass** es eine Startphase umfasst, in der der obere seitliche Raum (70) und/oder der Halteabstand (80) und/oder die maximale Höhe (90) gemäß den aufgezeichneten Werten eingestellt werden, wodurch der Förderer zwischen der Voreinstellungsphase und der Startphase zum Fördern eines anderen Formats von Vorformen genutzt werden kann.

2. Einstellverfahren nach Anspruch 1, **dadurch gekennzeichnet, dass** der obere seitliche Raum (70), der Halteabstand (80) und/oder die maximale Höhe (90) an den verschiedenen Einstellpunkten, die entlang der längsverlaufenden Förderfläche (2) verteilt sind, in kontrollierter Weise eingestellt werden.

3. Einstellverfahren nach einem der vorangehenden Ansprüche, **dadurch gekennzeichnet, dass** der obere seitliche Raum (70), der Halteabstand (80) und/oder die maximale Höhe (90) durch versetzte Steuerung der Einstellpunkte eingestellt werden.

4. Einstellverfahren nach einem der vorangehenden Ansprüche, **dadurch gekennzeichnet, dass** der Wert des oberen seitlichen Raums (70), des Halteabstands (80) und/oder der maximalen Höhe (90) an zumindest einem Einstellpunkt verändert wird.

5. Vorrichtung zum Einstellen eines Förderers (2) von Vorformen (1),
wobei jede Vorform (1) ein Format aufweist und aus zumindest einem Körper (100) gebildet ist, der von einem in Bezug auf den Körper (100) radial vorstehenden ringförmigen Kragen (101) überragt wird, einen Abschnitt (102) unter dem Kragen (101) aufweist und oben mit einem Hals (103) versehen ist, der in einem Ausguss (104) endet,
wobei der Förderer (2) eine längsverlaufende Fläche (3) zum Fördern der Vorformen (1) umfasst, die mit Mitteln (6) zum Führen der Vorformen (1) versehen ist, wobei die Führungsmittel (6) gebildet sind aus:
- zumindest einem Paar von Führungen (7), deren Positionen einen seitlichen Raum (70) zum Stützen des Abschnitts (102) unter dem Kragen (101) definieren;
- zumindest einem Paar von Schienen (8), deren Positionen einen querverlaufenden unteren Halteabstand (80) definieren;
- zumindest einer oberen Führung (9), deren Position eine maximale Höhe (90) zwischen den Führungen (7) und dem Ausguss (104) definiert;
wobei die Einstellvorrichtung Mittel (10) zum Einstellen der Führungsmittel (6) umfasst, wobei die Einstellmittel (10) Einstellorgane (11) umfassen, die unabhängig von den Positionen jedes Paars von Führungen (7), jedes Paar von Schienen (8) und jeder oberen Führung (9) sind, wobei die Einstellorgane (11) an Einstellpunkten entlang der längsverlaufenden Förderfläche (3) verteilt sind,
**dadurch gekennzeichnet, dass**
die Einstellvorrichtung Folgendes umfasst:
- Mittel zum Aufzeichnen der Positionsdaten jedes Paars von Führungen (7), jedes Paars von Schienen (8) und jeder oberen Führung (9) für jedes Format von Vorformen (1);
- wobei jedes Einstellorgan (11) Antriebsmittel zum Bewegen jedes Paars von Führungen (7), jedes Paars von Schienen (8) und jeder oberen Führung (9) umfasst;
- wobei die zu dem Paar von Führungen (7), zu dem Paar von Schienen (8) und zur oberen Führung (9) gehörenden Antriebsmittel durch getrennte Gruppen gesteuert werden;
- wobei die Einstellmittel (10) Mittel zum automatischen Steuern jeder Gruppe der Antriebsmittel in Abhängigkeit von den für jedes Vorformformat (1) aufgezeichneten Daten umfassen.

6. Einstellvorrichtung nach dem vorangehenden Anspruch, **dadurch gekennzeichnet, dass** die Steuermittel versetzte Informatikmittel umfassen, die zumindest die Aufzeichnungsmittel einschließen.

## Claims

1. Method of adjusting a conveyor (2) of preforms (1), each preform (1) having a format and consisting at least of a body (100) surmounted by an annular collar (101) projecting radially relative to said body (100), forming a portion (102) under the collar (101), and including on the top a neck (103) terminated by a rim (104), said method comprising a preadjustment phase during which preforms (1) with a first format are conveyed along a longitudinal conveying surface (3) and in which:
- each preform (1) is supported under its collar (101) by at least one pair of guides (7) defining a lateral support space (70) of said portion (102) under the collar (101) ;
- the lower part of the body (100) of each preform (1) is guided by at least one pair of rails (8) defining a lower transverse holding gap (80);
- the rim (104) of each preform (1) is guided by at least one top guide (9) defining a maximum height (90) between said guides (7) and the rim (104);
said pair of guides (7), said pair of rails (8), said top guide (9) extending along the longitudinal conveying surface (3);
said lateral support space (70), said lower holding gap (80) and said maximum height (90) being adjusted independently relative to said first format at different adjustment points distributed along the longitudinal conveying surface (3);
- the values of the upper lateral space (70), of the holding gap (80) and of the maximum height (90) for said first format of preforms (1) are recorded;
said method being **characterized in that** it comprises a starting phase in which the upper lateral space (70) and/or the holding gap (80) and/or the maximum height (90) is or are adjusted automatically in accordance with said recorded values, whereby the conveyor may be used to convey another format of preforms between the preadjustment phase and the starting phase.

2. Adjustment method according to Claim 1, **characterized in that** the upper lateral space (70), the holding gap (80) and/or the maximum height (90) is or are adjusted at the levels of said different adjustment points distributed along the longitudinal conveying surface (2) in a manner tied to the upper lateral space, to the holding gap and/or to the maximum height, respectively.

3. Adjustment method according to either one of the preceding claims, **characterized in that** the upper lateral space (70), the holding gap (80) and/or the maximum height (90) is or are adjusted by remote control of said adjustment points.

4. Adjustment method according to any one of the preceding claims, **characterized in that** the value of the upper lateral space (70), of the holding gap (80) and/or of the maximum height (90) is modified at one adjustment point at least.

5. Device for adjusting a conveyor (2) of preforms (1), each preform (1) having a format and consisting at least of a body (100) surmounted by an annular collar (101) projecting radially relative to said body (100), forming a portion (102) under the collar (101), and including on the top a neck (103) terminated by a rim (104), said conveyor (2) comprising a longitudinal surface (3) for conveying said preforms (1) provided with means (6) for guiding said preforms (1), said guide means (6) consisting of:
- at least one pair of guides (7) the positions of which define a lateral support space (70) for said portion (102) under the collar (101);
- at least one pair of rails (8) the positions of which define a lower transverse holding gap (80);
- at least one top guide (9) the position of which defines a maximum height (90) between said guides (7) and the rim (104) ;
said adjustment device comprising means (10) for adjusting said guide means (6), said adjustment means (10) comprising independent members (11) for adjusting the positions of each pair of guides (7), of each pair of rails (8) and of each top guide (9), said adjustment members (11) being distributed at adjustment points along said longitudinal conveying surface (3),
**characterized in that**
said adjustment device comprises:
- means for recording data on the positions of each pair of guides (7), of each pair of rails (8) and of each top guide (9) for each format of preforms (1);
- each adjustment member (11) comprising means for driving the movement of each pair of guides (7), of each pair of rails (8) and of each top guide (9);
- said driving means specific to the pair of guides (7), to the pair of rails (8) and to the top guide (9) being controlled in respective distinct groups;
- said adjustment means (10) comprising means for automatic control of each group of said driving means as a function of said data recorded for each format of preforms (1).

6. Adjustment device according to the preceding claim, **characterized in that** said control means comprise remote data processing means at least incorporating said recording means.
